Europäisches Patentamt

European Patent Office

Office européen des brevets

(11) Veröffentlichungsnummer: **0 470 385 A2**

## EUROPÄISCHE PATENTANMELDUNG

(21) Anmeldenummer: **91111473.4**

(22) Anmeldetag: **10.07.91**

(51) Int. Cl.⁵: **B23D 61/00, B27B 33/02**

(30) Priorität: **09.08.90 DE 4025259**

(43) Veröffentlichungstag der Anmeldung:
**12.02.92 Patentblatt 92/07**

(84) Benannte Vertragsstaaten:
**BE FR IT NL SE**

(71) Anmelder: **ACKERMANN + SCHMITT GmbH + CO. KG**
**Bahnhofstrasse 15**
**W-7141 Steinheim/Murr(DE)**

(72) Erfinder: **Max, Walter**
**Esslinger Strasse 19**
**W-7300 Esslingen(DE)**

(74) Vertreter: **Hoeger, Stellrecht & Partner**
**Uhlandstrasse 14 c**
**W-7000 Stuttgart 1(DE)**

(54) **Sägeblatt für eine motorgetriebene Stichsäge.**

(57) Ein Sägeblatt für eine motorgetriebene Stichsäge umfaßt einen relativ kurzen und schmalen Einspannabschnitt zum Befestigen des Sägeblattes an einer vor- und zurückbewegten Hubstange der Stichsäge sowie einen relativ langen, breiteren und frei vom vorderen Ende der Stichsäge abstehenden, mit Sägezähnen versehenen Arbeitsabschnitt zum Durchtrennen von ortsfest gehaltenen, rohrförmigen Werkstücken, wobei die Stichsäge um eine ortsfeste Achse relativ zum Werkstück schwenkbar ist und ein Teil des Arbeitsabschnittes des Sägeblattes bei jedem Rückwärtshub der Hubstange in das vordere Ende der Stichsäge eintritt. Der beim Rückwärtshub der Hubstange frei über das vordere Ende der Stichsäge vorstehende Teil des Arbeitsabschnittes des Sägeblattes weist gegenüber dem beim Rückwärtshub in das vordere Ende eintretenden Teil des Arbeitsabschnittes eine zusätzliche Verbreiterung auf, die ein Verbiegen und Verwinden des Sägeblattes insbesondere beim Durchtrennen von Rohren größeren Durchmessers verhindert.

Fig.4

Die Erfindung betrifft ein Sägeblatt für eine motorgetriebene Stichsäge mit einem relativ kurzen und schmalen Einspannabschnitt zum Befestigen des Sägeblatts an einer vor- und zurückbewegten Hubstange der Stichsäge und mit einem relativ langen, breiteren und frei vom vorderen Ende der Stichsäge abstehenden, einseitig mit Sägezähnen versehenen Arbeitsabschnitt zum Durchtrennen von ortsfest gehaltenen, rohrförmigen Werkstücken aus Metall, wobei die Stichsäge um eine ortsfeste Achse relativ zum Werkstück schwenkbar ist und ein Teil des Arbeitsabschnittes des Sägeblattes bei jedem Rückwärtshub der Hubstange in das vordere Ende der Stichsäge eintritt.

Mit den bekannten Sägeblättern für motorgetriebene Stichsägen dieser Art ist es schwierig, Rohre, insbesondere von größerem Durchmesser über beispielsweise etwa 100 mm, genau rechtwinklig zu durchtrennen. Meist entsteht am durchzutrennenden Rohr ein mehr oder wellenförmig verlaufender Schnitt, der nicht nur unschön, sondern gegebenenfalls auch dann hinderlich ist, wenn nach dem Sägevorgang an das entstandene Rohrende andere Teile, z. B. Armaturen oder dergleichen, angeflanscht werden sollen.

Es ist Aufgabe der Erfindung, ein gattungsgemäßes Sägeblatt für eine motorgetriebene Stichsäge so zu verbessern, daß mit seiner Hilfe Rohre geradlinig und rechtwinklig mit Bezug auf die Rohrachse durchtrennt werden können.

Die Aufgabe wird dadurch gelöst, daß der beim Rückwärtshub der Hubstange frei über das vordere Ende der Stichsäge vorstehende Teil des Arbeitsabschnittes des Sägeblattes gegenüber dem beim Rückwärtshub in das vordere Ende eintretenden Teil des Arbeitsabschnittes eine zusätzliche Verbreiterung aufweist.

Die nachstehende Beschreibung einer bevorzugten Ausführungsform der Erfindung dient im Zusammenhang mit beiliegender Zeichnung der weiteren Erläuterung. Es zeigen:

Figur 1     eine Teilschnittansicht einer Stichsäge mit eingespanntem Sägeblatt;

Figur 2     schematisch die Stichsäge aus Figur 1 beim Durchsägen eines Rohres;

Figur 3     den idealen und tatsächlichen Verlauf eines Sägeschnitts an einem Rohr und

Figur 4     ein Sägeblatt für eine motorgetriebene Stichsäge in Einzeldarstellung.

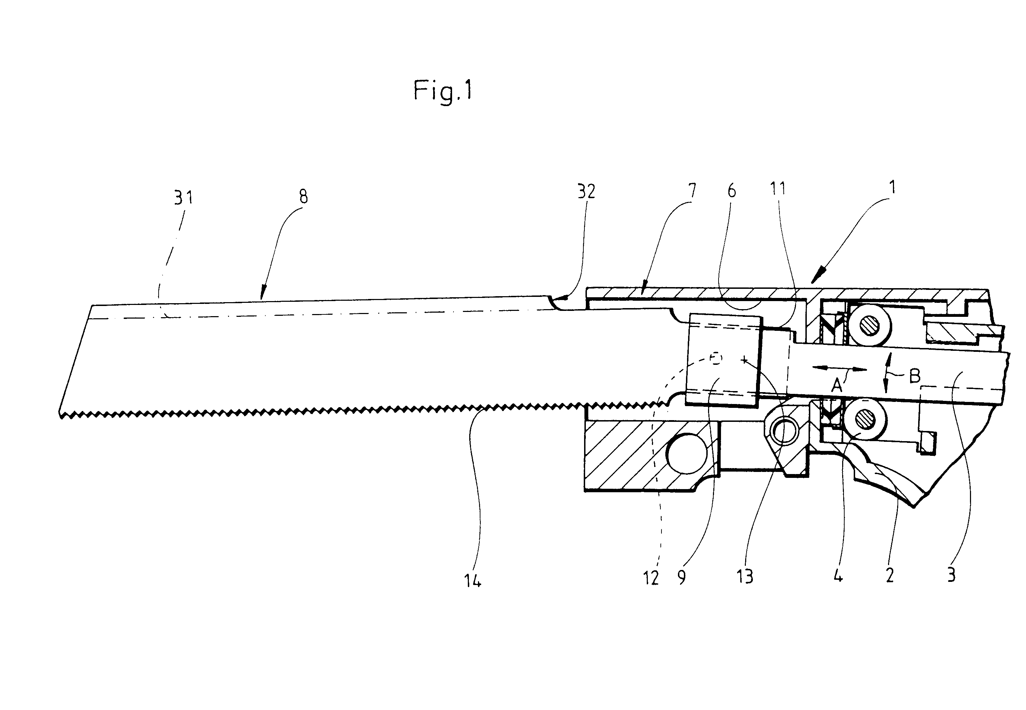

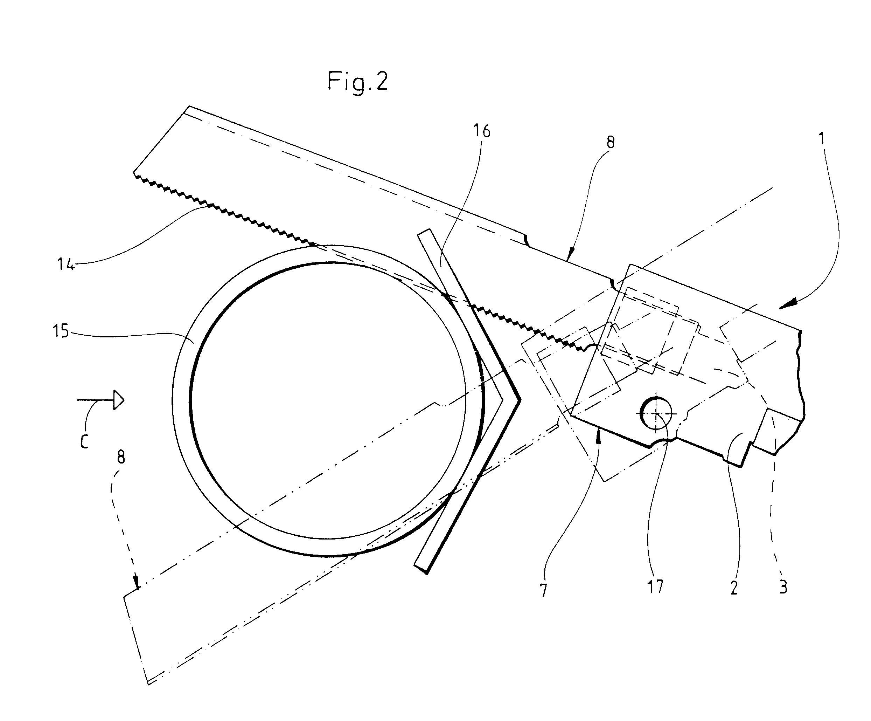

Die Figur 1 zeigt mehr oder weniger schematisch das vordere Ende einer Stichsäge 1 mit einem Gehäuse 2, dessen in Figur 2 rechts nicht mehr sichtbarer Teil in an sich bekannter Weise einen vorzugsweise elektrischen Antriebsmotor umschließt und in einen Haltegriff für die Stichsäge ausläuft. Der Antriebsmotor treibt in ebenfalls an sich bekannter Weise eine Hubstange 3 vor- und zurückgehend (Pfeil A) an, wobei die Hubstange 3 zwischen zwei Rollen 4, 5 gleitend geführt ist und außer der in Richtung des Pfeiles A erfolgenden Hin- und Herbewegung in der Regel noch einen Pendelhub uni einen kleinen Winkelbetrag in Richtung des Pfeiles B ausführt. Das vordere, über die Rollen 4, 5 vorstehende, freie Ende der Hubstange 3 befindet sich in einer Ausnehmung 6, die am vorderen Ende der Stichsäge 1 in deren Gehäuse 2 ausgebildet ist.

Im Bereich der Ausnehmung 6 ist mit dem freien Ende der Hubstange 3 in an sich bekannter Weise ein Stichsägenblatt 8 fest verbunden, und zwar mit Hilfe einer das freie Ende der Hubstange 3 umschließenden Muffe 9 rechteckigen Querschnitts, die gleichzeitig das freie Ende der Hubstange 3 und einen entsprechenden relativ kurzen, an die Flanke der Hubstange 3 angelegten Einspannabschnitt 11 des Sägeblattes 8 umschließt. Das Sägeblatt 8 weist an seinem Einspannabschnitt 11 eine Bohrung auf, in die ein seitlich von der Hubstange 3 abstehender Stift 12 eintritt. Mit einer Schraube 13, die in Figur 1 lediglich durch ihren Mittelpunkt angedeutet ist, wird die Muffe 9 so mit der Hubstange 3 verspannt, daß das Sägeblatt 8 zwischen der Innenwand der Muffe 9 und der Flanke der Hubstange 3 sicher festgeklemmt ist und die hin- und hergehende Pendelbewegung der Hubstange 3 mit ausführt. Die Verbindung des Sägeblattes 8 mit der Hubstange 3 ist konventionell und könnte auch in anderer Weise als beschrieben vorgenommen werden.

Das Sägeblatt 8 weist an seiner in Figur 1 unten liegenden Kante in üblicher Weise eine Sägezahnung 14 auf.

Die Figur 2 zeigt schematisch den Einsatz der Stichsäge 1 aus Figur 1 beim Durchtrennen eines Rohres 15, das an einer ortsfesten, winkelförmigen Unterlage 16 in bekannter Weise, z. B. mit Hilfe einer Spannkette, abgestützt ist. Die Stichsäge 1 ist relativ zu der Unterlage 16 und dem in dieser abgestützten Rohr 15 um eine Drehachse 17 schwenkbar. Diese Drehachse 17 wird gewöhnlich durch einen in eine Bohrung am vorderen Ende 7 des Stichsägengehäuses 2 einführbaren Drehbolzen realisiert, der (in nicht dargestellter Weise) mit der Unterlage 16 und deren zugeordneter Einspannvorrichtung starr verbunden ist. Somit kann die Stichsäge 1 mit ihrem Sägeblatt 8 ausgehend etwa von der in Figur 2 mit ausgezogenen Linien dargestellten Position in die in Figur 2 strichpunktiert dargestellte Lage relativ zum Rohr 15 verschwenkt erden, um letzteres zu durchtrennen. In Figur 2 ist das Sägeblatt 8 in seiner oberen Stellung gerade in die Wand des Rohres 15 eingetreten. In der unteren, strichpunktiert dargestellten Position befindet sich das Sägeblatt kurz vor seinem Austritt aus der Rohrwand.

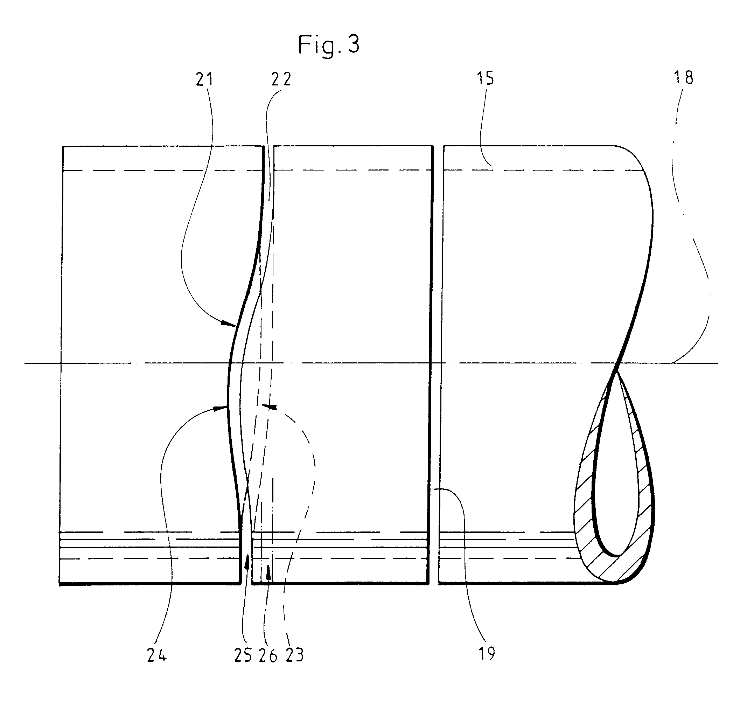

In Figur 3 ist das zu durchtrennende Rohr 15 mit Blickrichtung entlang dem Pfeil C in Figur 2 dargestellt. In das Rohr 15 der Figur 3 ist rechts ein idealer, senkrecht zur Rohrachse 18 verlaufender, geradliniger Sägeschnitt 19 eingezeichnet. In Wirklichkeit verläuft der Sägeschnitt mit herkömmlichen Sägeblättern 8 jedoch wellenförmig, wie in Figur 3 bei 21 dargestellt. Der Sägeschnitt 21 beginnt rechtwinklig zur Rohrachse 18 im Bereich 22 der oberen Rohrwand. Anschließend verlaufen die vom hinteren und vorderen Teil des Sägeblattes 8 ausgeführten Sägeabschnitte in der hinteren bzw. vorderen Rohrwand nicht mehr Parallel zueinander, sondern in unterschiedlicher Weise gekrümmt. Dabei ist der in der hinteren Rohrwand ausgebildete Schnittverlauf 23 noch einigermaßen senkrecht zur Rohrachse 18, weil das Sägeblatt im Bereich der hinteren Rohrwand noch weitgehend durch seine Befestigung an der allseitig geführten Hubstange 3 stabilisiert ist. Der Sägeschnitt 24 in der vorderen Rohrwand verläuft deutlich gekrümmt, vom hinteren Sägeschnitt 23 abweichend, weil das diesen Schnitt 24 ausführende, vordere Ende des Sägeblattes 8, welches vom Einspannabschnitt 11 des Sägeblattes 8 weit entfernt liegt, zur Verwindung und Verbiegung neigt. Im Bereich der unteren Rohrwand müssen die beiden Sägeschnitte in der hinteren und vorderen Rohrwand naturgemäß wieder zusammenlaufen, wie in Figur 3 durch das Bezugszeichen 25 angedeutet. An dieser Stelle 25 tritt das Sägeblatt 8 unten aus dem Rohr 15 aus. In Figur 3 ist zusätzlich diejenige Stelle 26 strichpunktiert angedeutet, an welcher das Sägeblatt 8 bei einem ideal verlaufenden Schnitt unten aus dem Rohr 15 austreten müßte.

Der in Figur 3 dargestellte, reale Schnittverlauf wurde in langwierigen Untersuchungen ermittelt und analysiert. In überraschender Weise wurde gefunden, daß sich der reale Schnittverlauf an den idealen Schnittverlauf (Bezugszeichen 19 in Figur 3) ganz oder doch weitgehend annähern läßt, wenn man das Sägeblatt 8 in seinem vorderen Arbeitsabschnitt durch eine Verbreiterung 31 verstärkt. Offenbar wird hierdurch einer Verbiegung und Verwindung des Sägeblattes 8 entgegengewirkt, so daß die Schnitte an der vorderen und hinteren Rohrwand parallel verlaufen.

In Figur 1 befindet sich das Sägeblatt 8 am hinteren Ende seines durch die Hubstange 3 ausgelösten Rückwärtshubes. In Figur 1 hat das Sägeblatt 8 gerade das Ende seines Vorwärtshubes erreicht. Man erkennt aus Figur 1, daß das Sägeblatt 8 mit seinem die Verzahnung 14 aufweisenden Arbeitsabschnitt teilweise in die Ausnehmung 6 am vorderen Ende 7 der Stichsäge eintritt. Da die Ausnehmung 6, insbesondere mit Bezug auf herkömmliche Sägeblätter, eine verhältnismäßig geringe Höhe hat, kann die der Verstärkung dienende Verbreiterung 31 des Sägeblattes 8 nicht über die gesamte Länge der Verzahnung 14 vorgesehen werden, sondern nur so weit, wie das Sägeblatt 8 beim Rückwärtshub der Hubstange 3 (Figur 1) nicht in das vordere Ende 7 der Stichsäge 1 eintritt.

Wie die Figuren 1 und 2 zeigen, ist die der Verstärkung dienende, zusätzliche Verbreiterung 31 des Sägeblattes gegenüber der sonstigen Breite des Sägeblattes 8 durch eine abgerundete Stufe 32 abgesetzt, wobei die Stufe 32 so weit vom Einspannabschnitt 11 des Sägeblattes 8 entfernt ist, daß die Stufe 32 beim Rückwärtshub der Hubstange 3 nicht in das vordere Ende 7 der Stichsäge 1 eintritt.

Bei der auf der Zeichnung dargestellten Ausführungsform der Erfindung liegt die zusätzliche Verbreiterung 31 an der den Sägezähnen 14 abgewandten Seite des Sägeblatts 8. Grundsätzlich könnte die Verbreiterung 31 mit Bezug auf den beim Rückwärtshub der Hubstange in das Stichsägengehäuse 2 eintretenden Bereich des Sägeblattes 8 auch an der die Sägezähne 14 tragenden Seite des Sägeblatts 8 vorgesehen werden.

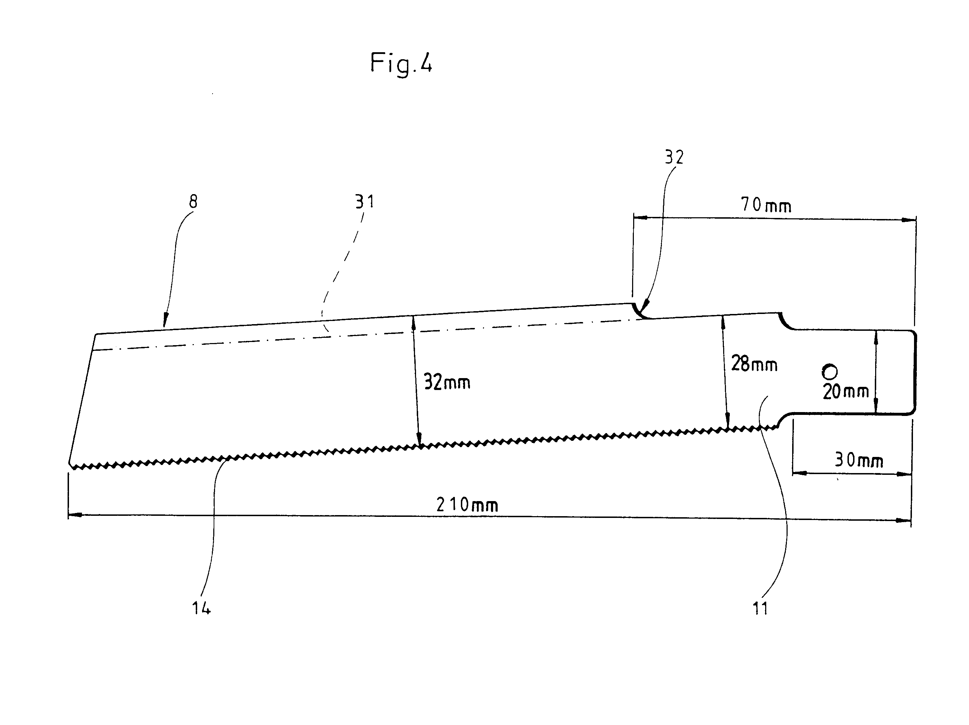

Die Figur 4 zeigt in Einzeldarstellung und unter Angabe typischer Maße eine bevorzugte Ausführungsform eines Sägeblatts gemäß der Erfindung. Bei einer Gesamtlänge von 210 mm des Sägeblatts 8 hat der Einspannabschnitt 11 eine Breite von 20 mm. An ihn schließt sich bei bekannten Sägeblättern ein mit den Sägezähnen 14 versehener Arbeitsabschnitt an, der gewöhnlich etwa 28 mm breit ist. Erfindungsgemäß ist dieser Arbeitsabschnitt ausgehend von der Stufe 32 auf 32 mm verbreitert, also um 4 mm breiter als ein normales Sägeblatt. Der bei Hin- und Herbewegung des Sägeblatts 8 in das vordere Ende 7 der Stichsäge 1 eintretende, hintere Abschnitt des Sägeblattes 8 hat eine Länge von etwa 70 mm.

Die in Figur 4 angegebenen Maße sind lediglich beispielhaft zu verstehen. Sie können, insbesondere bei insgesamt längeren Sägeblättern 8, entsprechend geändert werden. Als besonders günstig haben sich Verbreiterungen 31 des Sägeblattes 8 im Bereich von 3 bis 7, insbesondere 4 bis 5 mm erwiesen. Eine besonders vorteilhafte Dicke oder Stärke des Sägeblattes 8 liegt zwischen etwa 2 und 2,5 mm, insbesondere bei 2,3 mm.

Der durch die Erfindung erzielbare Effekt eines geradlinigen, insbesondere rechtwinklig zu einer Rohrachse verlaufenden Sägeschnittes kommt besonders bei Rohren größeren Durchmessers zum Tragen, beispielsweise bei Rohren mit einem Innendurchmesser zwischen 100 und 150 mm.

Der Effekt des ungleichmäßigen Sägeschnittverlaufes tritt besonders bei Rohren aus hartem Werkstoff, also insbesondere Metall, auf, weshalb die Erfindung in erster Linie auf das Duchtrennen von Metallrohren abzielt. Grundsätzlich können im Bedarfsfall mit den erfindungsgemäßen Sägeblättern jedoch auch Rohre aus anderen Werkstoffen, beispielsweise aus hartem Kunststoff, in der beschriebenen idealen Weise durchtrennt werden.

hat.

## Patentansprüche

1. Sägeblatt für eine motorgetriebene Stichsäge mit einem relativ kurzen und schmalen Einspannabschnitt zum Befestigen des Sägeblatts an einer vor- und zurückbewegten Hubstange der Stichsäge und mit einem relativ breiten und frei vom vorderen Ende der Stichsäge abstehenden, einseitig mit Sägezähnen versehenen Arbeitsabschnitt zum Durchtrennen von ortsfest gehaltenen, rohrförmigen Werkstücken aus Metall, wobei die Stichsäge um eine ortsfeste Achse relativ zum Werkstück schwenkbar ist und ein Teil des Arbeitsabschnitts des Sägeblattes bei jedem Rückwärtshub der Hubstange in das vordere Ende der Stichsäge eintritt,
**dadurch gekennzeichnet, daß**
der beim Rückwärtshub der Hubstange (3) frei über das vordere Ende (7) der Stichsäge (1) vorstehende Teil des Arbeitsabschnittes des Sägeblatts (8) gegenüber dem beim Rückwärtshub in das vordere Ende eintretenden Teil des Arbeitsabschnittes eine zusätzliche Verbreiterung (31) aufweist.

2. Sägeblatt nach Anspruch 1, dadurch gekennzeichnet, daß die zusätzliche Verbreiterung (31) an der den Sägezähnen (14) abgewandten Seite des Arbeitsabschnittes des Sägeblattes (8) angeordnet ist.

3. Sägeblatt nach Anspruch 2, dadurch gekennzeichnet, daß die zusätzliche Verbreiterung (31) am Arbeitsabschnitt des Sägeblatts (8) durch eine Stufe (32) vom Rest des Sägeblatts abgesetzt ist.

4. Sägeblatt nach Anspruch 1, dadurch gekennzeichnet, daß bei einer Gesamtlänge des Sägeblattes (8), einschließlich Einspann- und Arbeitsabschnitt, von mehr als etwa 200 mm die zusätzliche Verbreiterung (31) zwischen 3 und 7 mm liegt.

5. Sägeblatt nach Anspruch 4, dadurch gekennzeichnet, daß die zusätzliche Verbreiterung (31) zwischen 4 und 5 mm liegt.

6. Sägeblatt nach Anspruch 4, dadurch gekennzeichnet, daß es eine Dicke zwischen etwa 2 und 2,5 mm, vorzugsweise von etwa 2,3 mm

Fig.1

Fig.2

Fig. 3

# Fig.4

8

31

32

70 mm

8

32 mm

28 mm

20 mm

30 mm

210 mm

14

11

EP 0 470 385 A2